# FASCICULE DE BREVET EUROPEEN

(11) **EP 2 379 869 B1**
(45) Date de publication et mention de la délivrance du brevet: **31.10.2018**
(21) Numéro de dépôt: 09803856.5
(22) Date de dépôt: 14.12.2009
(51) Int. Cl.: F02F 1/24, B23P 19/04, F01L 1/053, F01L 1/46, F16C 43/04

(54) **CULASSE DE MOTEUR DE VÉHICULE AUTOMOBILE**
KRAFTFAHRZEUGMOTORZYLINDERKOPF
MOTOR VEHICLE ENGINE CYLINDER HEAD

(30) Priorité: 19.01.2009 FR 0950308
(43) Date de publication de la demande: 26.10.2011
(73) Titulaire: PSA Automobiles SA, 78300 Poissy (FR); GM Global Technology Operations LLC, Detroit, MI 48265-3000 (US)
(72) Inventeur: VIDAL, Olivier, F-42170 Saint Just Saint Rambert (FR); LE GUYADER, Gaël, F-28130 Maintenon (FR)
(86) Numéro de dépôt international: PCT/FR2009/052518
(87) Numéro de publication internationale: WO 2010/081950

(56) Documents cités:
- US-A- 4 951 386
- US-A- 5 685 265
- US-A1- 2003 005 903

## Description

La présente invention concerne une culasse de moteur de véhicule automobile. Elle concerne également un procédé de montage d'un arbre à cames sur la culasse de moteur de véhicule automobile selon l'invention.

L'invention trouve une application particulièrement avantageuse dans le domaine du montage d'arbres à cames sur la culasse des moteurs de véhicules automobiles.

Une culasse avec un palier d'arbre à cames est connue par exemple de US2003/0005903.

US4951386 décrit un appareil permettant de démonter les paliers d'un bloc cylindre.

De manière connue, le montage d'un ou plusieurs arbres à cames sur la culasse d'un moteur de véhicule automobile comprend une première étape dite d'usinage qui consiste dans un premier temps à monter et visser sur un élément de palier de forme sensiblement semi-cylindrique un chapeau de palier complémentaire de forme également sensiblement semi-cylindrique, puis à usiner l'alésage ainsi réalisé de manière obtenir un palier présentant un diamètre conforme à celui de l'arbre à cames auquel il est destiné. Il est important de signaler qu'après usinage la culasse et le chapeau de palier forment une paire qui ne peut plus être dissociée par la suite.

Dans un deuxième temps, l'étape d'usinage comprend, à la suite de l'opération d'usinage proprement dit, une opération dite de lavage qui consiste à dévisser et démonter le chapeau de palier de l'élément de palier de la culasse et à le placer sur une platine de transport appariée à la culasse, l'ensemble culasse-platine de transport étant installé sur un convoyeur afin d'être acheminé du poste d'usinage proprement dit à un poste de lavage.

L'opération de lavage consiste à nettoyer l'interface entre le chapeau de palier et l'élément de palier de la culasse afin l'éliminer les copeaux formés lors de l'usinage susceptibles d'obstruer les rainures de passage d'huile de graissage haute pression.

Selon un mode de réalisation, l'opération de lavage est réalisée par une machine à laver qui saisit la culasse et le chapeau de palier hors du convoyeur, la platine de transport étant alors recyclée pour servir à une nouvelle paire culasse-chapeau de palier.

A l'issue de l'opération de lavage, le chapeau de palier est remonté et revissé sur l'élément de palier de la culasse de manière à conserver l'appariement des deux pièces. La culasse ainsi munie du chapeau de palier associé est alors transportée vers un poste destiné à effectuer la deuxième étape du montage, c'est-à-dire l'assemblage de l'arbre à cames dans le palier préalablement usiné.

Lorsque la culasse complète arrive au poste d'assemblage, le chapeau de palier est à nouveau dévissé et démonté afin de permettre la mise en place de l'arbre à cames, l'assemblage définitif étant réalisé par remontage et revissage du chapeau de palier sur l'élément de palier de la culasse.

Comme on le voit, ce procédé connu de montage d'arbres à cames nécessite la création d'une platine dédiée au transport du chapeau de palier à côté de la culasse appariée, ainsi que l'installation de nombreux postes de montage/vissage et dévissage/démontage du chapeau.

Aussi, un but de l'invention est de proposer une culasse de moteur de véhicule automobile qui permettrait, d'une part, d'éviter l'utilisation d'une platine de transport et, d'autre part, de simplifier les diverses manipulations du chapeau de palier lors du procédé de montage.

Ce but est atteint, conformément à l'invention, grâce à une culasse de moteur à combustion interne, tel que par exemple un moteur de véhicule automobile, comprenant au moins un élément de palier d'arbre à cames, ledit élément de palier étant destiné à recevoir un chapeau de palier complémentaire, remarquable en ce que ladite culasse comprend une zone de stockage temporaire dudit chapeau de palier sur la culasse.

L'aménagement sur la culasse d'une zone dans laquelle le chapeau de palier peut être stocké temporairement lors des étapes d'usinage et d'assemblage permet de simplifier sensiblement le procédé de montage d'arbres à cames tel que décrit précédemment en référence à l'état de la technique.

En effet, conformément à l'invention, un procédé de montage d'un arbre à cames sur une culasse de moteur de véhicule automobile selon l'invention est remarquable en ce que ledit procédé comprend des opérations consistant :
- après une étape d'usinage du palier d'arbre à cames, à transférer ledit chapeau de palier dudit élément de palier à la zone de stockage temporaire ménagée sur la culasse,
- à l'issue d'une étape d'assemblage de l'arbre à cames, à transférer le chapeau de palier de ladite zone de stockage temporaire sur l'élément de palier de la culasse.

Le procédé de montage conforme à l'invention se déroule alors de la manière suivante.

Après la première opération d'usinage proprement dit, le chapeau de palier est dévissé et démonté de l'élément de palier de la culasse, mais, au lieu d'être placé sur une platine transport, il est transféré dans la zone de stockage temporaire. L'ensemble ainsi apparié culasse-chapeau de palier peut être acheminé vers le poste de lavage sans avoir recours à une platine spécifique destinée à conserver l'appariement entre la culasse et le chapeau de palier associé durant le transport vers la machine de lavage.

La suppression de la platine de transport est un avantage considérable du procédé conforme à l'invention par rapport au procédé connu de l'état de la technique.

Après l'opération de lavage, l'ensemble apparié culasse-chapeau de palier est dirigé vers le poste d'assemblage de l'arbre à cames, ceci sans avoir à remonter et revisser le chapeau de palier sur l'élément de palier de la culasse, comme cela est nécessaire dans l'état de la technique afin de conserver l'appariement lors du transport de la culasse et du chapeau de palier vers le poste d'assemblage. Est ainsi évité un poste supplémentaire de remontage/revissage en fin de ligne de lavage.

La suppression de ce poste de remontage/revissage est un deuxième avantage de l'invention par rapport à l'état de la technique.

Selon l'invention, ladite zone de stockage temporaire comprend des moyens de fixation temporaire dudit chapeau de palier sur la culasse.

Avantageusement, lesdits moyens de fixation temporaire du chapeau de palier dans la zone de stockage temporaire sont identiques à des moyens de fixation dudit chapeau de palier sur l'élément de palier de la culasse.

Cette disposition simplifie considérablement les opérations de transfert du chapeau de palier dans la zone de stockage temporaire et inversement, puisqu'elles peuvent être effectuées avec les mêmes outils que ceux utilisés pour le montage et le démontage du chapeau de palier de l'élément de palier de la culasse.

Selon une première variante, lesdits moyens de fixation temporaire sont des moyens de vissage du chapeau de palier sur la culasse.

Selon une deuxième variante, lesdits moyens de fixation temporaire sont des moyens de clipsage du chapeau de palier sur la culasse.

Selon une troisième variante, lesdits moyens de fixation temporaire sont des moyens de blocage du chapeau de palier sur la culasse.

Enfin, l'invention prévoit que ladite zone de stockage temporaire est située dans un puits de chaîne de distribution. Cet emplacement permet de stocker le chapeau de palier dans un endroit bien protégé des chocs éventuels pouvant se produire lors du transport de la culasse le long de la ligne d'usinage, puis vers la ligne d'assemblage.

La description qui va suivre en regard des dessins annexés, donnés à titre d'exemples non limitatifs, fera bien comprendre en quoi consiste l'invention et comment elle peut être réalisée.
- La figure 1a est une vue en perspective montrant des éléments de palier d'une culasse de moteur de véhicule automobile.
- La figure 1b est une vue en perspective de la culasse de la figure 1a équipée d'un chapeau de palier.
- La figure 2 est une vue en perspective montrant une zone de stockage temporaire du chapeau de palier de la culasse des figures 1a et 1b.
- La figure 3 est une vue en perspective de la culasse de la figure 2 montrant le chapeau de palier en position dans la zone de stockage temporaire.

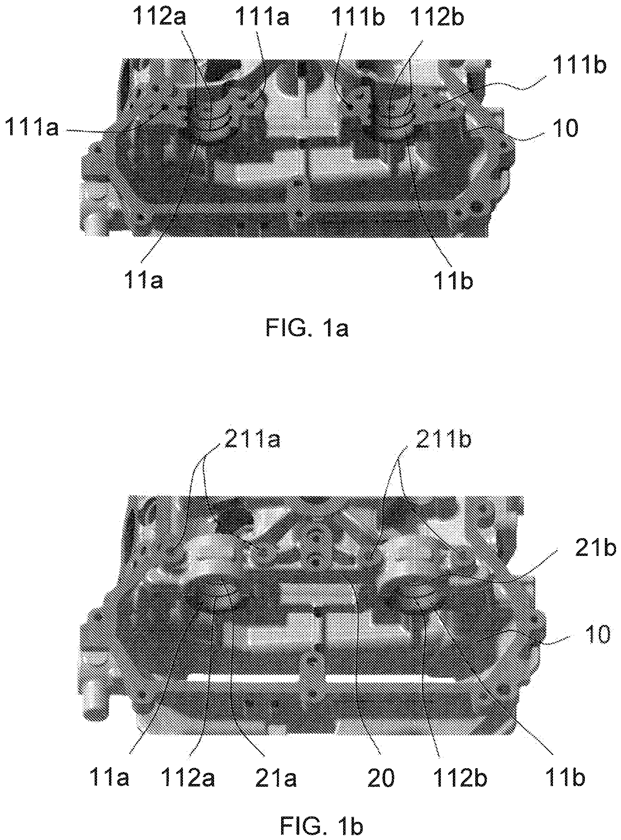

Sur la figure 1a est représentée une culasse 10 d'un moteur de véhicule automobile comprenant deux éléments 11a, 11b de palier semi-cylindriques destinés à recevoir respectivement deux arbres à cames, l'un pour commander les soupapes d'admission, l'autre pour commander les soupapes d'échappement. Les éléments 11a, 11b de palier sont usinés sur la culasse 10 elle-même.

Comme le montre la figure 1b, les éléments 11a, 11b de palier de la culasse 10 sont complétés par un chapeau 20 de palier comportant deux éléments 21a, 21b de palier semi-cylindriques complémentaires, formant avec les éléments 11a, 11b deux paliers complets pour chaque arbre à cames.

Dans l'exemple de réalisation montré sur les figures 1a et 1b, le chapeau 20 est fixé sur la culasse 10 par des moyens de fixation, tels que des vis, non représentées sur ces figures, qui traversent des trous 211a, 211b de passage ménagés dans le chapeau 20 pour s'engager dans des trous taraudés 111a, 111b dans la culasse 10.

Lors de l'opération d'usinage proprement dit, le chapeau 20 de palier est monté et vissé sur la culasse 10, comme indiqué sur la figure 1b, de manière à réaliser l'alésage des paliers au diamètre nominal prévu. C'est à l'issue de cette opération d'usinage que la culasse 10 et le chapeau 20 deviennent appariés et ne peuvent plus être séparés.

L'ensemble culasse 10-chapeau 20 doit être ensuite acheminé vers un poste de lavage destiné à éliminer les copeaux métalliques qui pourraient se former à l'intérieur de rainures d'huile de graissage haute pression. De telles rainures sont référencées 112a, 112b sur les figures 1a et 1b.

Avant que la culasse quitte le poste d'usinage, le chapeau 20 de palier est dévissé et démonté de la culasse 10 pour être transféré dans une zone de stockage temporaire ménagée sur la culasse 10.

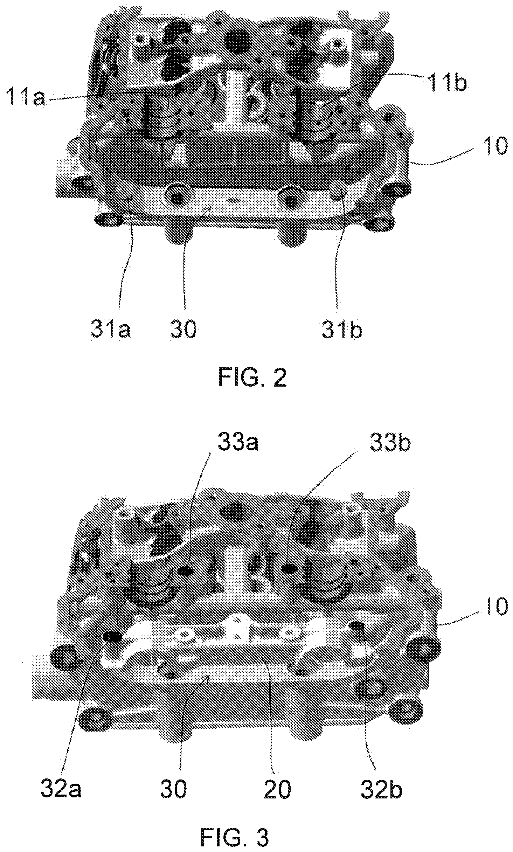

Selon le mode de réalisation de la figure 2, la zone de stockage temporaire est constituée par le puits 30 de chaîne de distribution du moteur. L'avantage de cette disposition est de placer le chapeau 20 de palier dans un endroit à l'abri des chocs pouvant se produire lors du transport de l'ensemble culasse 10-chapeau 20 du poste d'usinage au poste de lavage, puis du poste de lavage au poste d'assemblage des arbres à cames.

Le chapeau 20 de palier est fixé dans la zone 30 de stockage temporaire à l'aide de moyens de fixation temporaire qui, dans l'exemple montré aux figures 2 et 3, sont identiques au moyen de fixation du chapeau 20 sur les éléments 11a, 11b de palier de la culasse 10. Plus précisément, des bossages 31a, 31b sont formés dans la zone 30 de stockage temporaire et taraudés au même pas que les trous taraudés 111a, 111b pratiqués dans les éléments 11a, 11b de palier. Le chapeau 20 de palier est alors amené en position dans la zone 30 de manière à ce que deux trous 211a, 211b de passage du chapeau soient placés en regard des bossages 31a, 31b. Le chapeau 20 est ensuite fixé temporairement en vissant dans les bossages 31a, 31b deux des vis de fixation dont les traces sont indiquées par les références 32a, 32b sur la figure 3. Les deux autres vis de fixation de traces 33a, 33b sont vissées en attente dans les trous taraudés 111a, 111b des éléments 11a, 11b de palier.

Ce mode de fixation temporaire du chapeau 20 de palier présente l'avantage d'utiliser les mêmes vis pour la fixation définitive du chapeau 20 sur la culasse 10 et pour la fixation temporaire du chapeau 20 dans la zone 30 de stockage temporaire. Il faut cependant souligner que d'autres moyens de fixation temporaire peuvent être envisagés, comme des moyens de clipsage ou de blocage du chapeau 20 de palier sur la culasse 10.

Après l'opération de lavage, l'ensemble toujours apparié culasse 10-chapeau 20 est transporté vers le poste d'assemblage où le chapeau 20 palier est dévissé et démonté de la zone 30 de stockage temporaire pour être transféré et vissé dans sa position définitive sur les éléments 11a, 11b de palier, après que les arbres à cames aient été mis en place.

Le procédé selon l'invention permet des gains substantiels d'investissement par la suppression des platines de lavage et des convoyeurs de recirculation de ces platines. Il permet de plus de simplifier la ligne d'assemblage des culasses.

## Revendications

1. Culasse (10) de moteur à combustion interne, comprenant au moins un élément (11a, 11b) de palier d'arbre à cames, ledit élément de palier étant destiné à recevoir un chapeau (20) de palier complémentaire, **caractérisée en ce que** ladite culasse (10) comprend une zone (30) de stockage temporaire dudit chapeau (20) de palier ménagée sur la culasse (10), ladite zone (30) de stockage temporaire comprenant des moyens de fixation temporaire dudit chapeau (20) de palier sur la culasse (10).

2. Culasse selon la revendication 1, dans laquelle lesdits moyens de fixation temporaire du chapeau (20) de palier dans la zone (30) de stockage temporaire sont identiques à des moyens de fixation dudit chapeau (20) de palier sur l'élément (11a, 11b) de palier de la culasse (10).

3. Culasse selon l'une quelconque des revendications 1 ou 2, dans laquelle lesdits moyens de fixation temporaire sont des moyens de vissage du chapeau de palier sur la culasse.

4. Culasse selon l'une quelconque des revendications 1 ou 2, dans laquelle lesdits moyens de fixation temporaire sont des moyens de clipsage du chapeau (20) de palier sur la culasse (10).

5. Culasse selon l'une quelconque des revendications 1 ou 2, dans laquelle lesdits moyens de fixation temporaire sont des moyens de blocage du chapeau (20) de palier sur la culasse (10).

6. Culasse selon la revendication 5, dans laquelle lesdits moyens de fixation sont constitués par une vis centrale, dédiée à la fixation temporaire du chapeau de palier (20).

7. Culasse selon l'une quelconque des revendications précédentes, dans laquelle ladite zone de stockage temporaire est située dans un puits (30) de chaîne de distribution.

8. Culasse selon l'une des revendications précédentes, **caractérisée en ce que** la zone (30) de stockage temporaire dudit chapeau (20) de palier comprend deux bossages (31a, 31b) taraudés au même pas que des trous taraudés (11a, 11b) pratiqués dans des éléments (11a, 11b) du palier.

9. Procédé de montage d'un arbre à cames sur une culasse (10) selon l'une quelconque des revendications 1 à 8, **caractérisé en ce que** qu'il comprend des opérations consistant :
- après une étape d'usinage du palier d'arbre à cames, à transférer ledit chapeau (20) de palier dudit élément (11a, 11b) de palier à la zone (30) de stockage temporaire ménagée sur la culasse (10),
- à l'issue d'une étape d'assemblage de l'arbre à cames, à transférer le chapeau (20) de palier de ladite zone (30) de stockage temporaire sur l'élément (11a, 11b) de palier de la culasse (10).

10. Procédé de montage selon la revendication 9, **caractérisé en ce qu'**il comporte une étape de lavage de la culasse alors que ledit chapeau (20) de palier est positionné dans la zone (30) de stockage temporaire.

## Patentansprüche

1. Verbrennungsmotorzylinderkopf (10), der mindestens ein Nockenwellen-Lagerelement (11a, 11b) umfasst, wobei das Lagerelement dazu bestimmt ist, einen komplementären Lagerdeckel (20) zu erhalten, **dadurch gekennzeichnet, dass** der Zylinderkopf (10) eine Zone (30) zum vorübergehenden Lagern des Lagerdeckels (20), die auf dem Zylinderkopf (10) eingerichtet ist, umfasst, wobei die Zone (30) zum vorübergehenden Lagern Mittel zum vorübergehenden Befestigen des Lagerdeckels (20) auf dem Zylinderkopf (10) umfasst.

2. Zylinderkopf nach Anspruch 1, wobei die Mittel zum vorübergehenden Befestigen des Lagerdeckels (20) in der Zone (30) zum vorübergehenden Lagern mit Befestigungsmitteln des Lagerdeckels (20) auf dem Lagerelement (11a, 11b) des Zylinderkopfs (10) identisch sind.

3. Zylinderkopf nach einem der Ansprüche 1 oder 2, wobei die Mittel zum vorübergehenden Befestigen Schraubmittel des Lagerdeckels auf dem Zylinderkopf sind.

4. Zylinderkopf nach einem der Ansprüche 1 oder 2, wobei die Mittel zum vorübergehenden Befestigen Mittel zum Clipsen des Lagedeckels (20) auf dem Zylinderkopf (10) sind.

5. Zylinderkopf nach einem der Ansprüche 1 oder 2, wobei die Mittel zum vorübergehenden Befestigen Mittel zum Blockieren des Lagerdeckels (20) auf dem Zylinderkopf (10) sind.

6. Zylinderkopf nach Anspruch 5, wobei die Befestigungsmittel aus einer zentralen Schraube bestehen, die zur vorübergehenden Befestigung des Lagerdeckels (20) bestimmt ist.

7. Zylinderkopf nach einem der vorhergehenden Ansprüche, wobei die Zone zum vorübergehenden Lagern in einem Schacht (30) der Verteilungskette liegt.

8. Zylinderkopf nach einem der vorhergehenden Ansprüche, **dadurch gekennzeichnet, dass** die Zone (30) zum vorübergehenden Lagern des Lagedeckels (20) zwei Höcker (31a, 31b) umfasst, die mit derselben Gewindesteigung wie die Gewindelöcher (11a, 11b), die in den Elementen (11a, 11b) des Lagers angelegt sind, geschnitten sind.

9. Verfahren zur Montage einer Nockenwelle auf einen Zylinderkopf (10) nach einem der Ansprüche 1 bis 8, **dadurch gekennzeichnet, dass** es Vorgänge umfasst, die aus Folgendem bestehen:
- nach einem Bearbeitungsschritt des Nockenwellenlagers, Transferieren des Lagerdeckels (20) des Lagerelements (11a, 11b) zu der Zone (30) zum vorübergehenden Lagern, die auf dem Zylinderkopf (10) eingerichtet ist,
- nach einem Zusammenfügeschritt der Nockenwelle, Transferieren des Lagerdeckels (20) von der Zone (30) zum vorübergehenden Lagern auf das Lagerelement (11a, 11b) des Zylinderkopfs (10).

10. Montageverfahren nach Anspruch 9, **dadurch gekennzeichnet, dass** es einen Waschschritt des Zylinderkopfs umfasst, während der Lagerdeckel (20) in der Zone (30) zum vorübergehenden Lagern positioniert ist.

## Claims

1. An internal combustion engine cylinder head (10), including at least one camshaft bearing element (11a, 11b), said bearing element being intended to receive a complementary bearing cap (20), **characterized in that** said cylinder head (10) includes a region (30) for the temporary storage of said bearing cap (20) arranged on the cylinder head (10), said temporary storage region (30) including means for the temporary attachment of said bearing cap (20) on the cylinder head (10).

2. The cylinder head according to Claim 1, in which said temporary attachment means of the bearing cap (20) in the temporary storage area (30) are identical to attachment means of said bearing cap (20) on the bearing element (11a, 11b) of the cylinder head (10).

3. The cylinder head according to any one of Claims 1 or 2, in which said temporary attachment means are means for screwing the bearing cap on the cylinder head (10) .

4. The cylinder head according to any one of Claims 1 or 2, in which said temporary attachment means are means for snap-fastening of the bearing cap (20) on the cylinder head (10).

5. The cylinder head according to any one of Claims 1 or 2, in which said temporary attachment means are means for locking the bearing cap (20) on the cylinder head (10) .

6. The cylinder head according to Claim 5, in which said attachment means are constituted by a central screw, dedicated to the temporary attachment of the bearing cap (20).

7. The cylinder head according to any one of the preceding claims, in which said temporary storage area is situated in a timing chain well (30).

8. The cylinder head according to one of the preceding claims, **characterized in that** the temporary storage area (30) of said bearing cap (20) includes two bosses (31a, 31b) tapped at the same pitch as tapped holes (11a, 11b) formed in elements (11a, 11b) of the bearing.

9. A method for mounting a camshaft on a cylinder head (10) according to any one of Claims 1 to 8, **characterized in that** it includes operations consisting of:
- transferring said bearing cap (20) of said bearing element (11a, 11b) to the temporary storage area (30) arranged on the cylinder head (10) after a machining step of the camshaft bearing,
- transferring the bearing cap (20) from said temporary storage area (30) on the bearing element (11a, 11b) of the cylinder head (10) following an assembly step of the camshaft.

10. The mounting method according to Claim 9, **characterized in that** it comprises a step of washing the cylinder head while the said bearing cap (20) is positioned in the temporary storage area (30).
